# EUROPÄISCHE PATENTANMELDUNG

(11) **EP 3 255 375 A1**
(43) Veröffentlichungstag der Anmeldung: **13.12.2017**
(21) Anmeldenummer: 16174078.2
(22) Anmeldetag: 10.06.2016
(51) Int. Cl.: G01B 7/02

(54) **VERFAHREN UND SENSOR ZUR KONTAKTLOSEN MESSUNG EINER DISTANZ**

(71) Anmelder: CTR Carinthian Tech Research AG, 9524 Villach-St. Magdalen (AT)
(72) Erfinder: Binder, Alfred, 9523 Landskron (AT)
(74) Vertreter: Wirnsberger, Gernot

(57) **Zusammenfassung**

Die Erfindung betrifft ein Verfahren zur kontaktlosen Messung einer Distanz (D) mit einem Sensor (1), wobei eine Distanz (D) zu einem elektrisch leitfähigen Objekt (O) gemessen wird, wobei die Distanz (D) mit einem als HEMT ausgebildeten Sensor (1) bestimmt wird.

Weiter betrifft die Erfindung einen Sensor (1) zur kontaktlosen Messung einer Distanz (D) zu einem elektrisch leitfähigen Objekt (O), wobei der Sensor (1) als HEMT ausgebildet ist, wobei der Sensor (1) insbesondere zwei oder mehr metallische Elektroden (5, 6) umfasst.

Des Weiteren betrifft die Erfindung eine Verwendung eines solchen Sensors (1).

## Beschreibung

Die Erfindung betrifft ein Verfahren zur kontaktlosen Messung einer Distanz mit einem Sensor, wobei eine Distanz zu einem elektrisch leitfähigen Objekt gemessen wird.

Weiter betrifft die Erfindung einen Sensor zur kontaktlosen Messung einer Distanz zu einem elektrisch leitfähigen Objekt.

Darüber hinaus betrifft die Erfindung eine Verwendung eines solchen Sensors.

Standardmäßig werden zur elektronischen Messung eines Abstandes zu einem metallischen Objekt mit einem Sensor Kreiselektroden für eine kapazitive Messung eingesetzt. Dabei wird eine kapazitive Änderung zwischen Sensorelektroden und einem elektrisch leitfähigen Objekt gemessen. Das leitfähige Objekt und der kapazitive Abstandssensor bilden einen elektrischen Kondensator, wobei ein Abstand zwischen dem Objekt und dem Abstandssensor eine Kapazität des Kondensators bestimmt. Daraus folgt, dass sich bei einer Änderung eines Abstandes zwischen dem Abstandssensor bzw. dessen Sensorelektroden und dem Objekt das elektrische Feld und folglich die Kapazität ändert. Die kapazitive Distanzmessung ist für hochgenaue und präzise Messungen bekannt.

Nachteilig bei einer kapazitiven Distanzmessung ist jedoch, dass sich ein kapazitiver Abstandssensor nur zur Bestimmung von Abständen eignet, welche klein gegenüber einem Durchmesser der Sensorelektroden sind. Darüber hinaus ist eine erforderliche Elektronik recht komplex und somit kostenintensiv.

Hier setzt die Erfindung an. Aufgabe der Erfindung ist es, ein Verfahren der eingangs genannten Art anzugeben, mit welchem eine Distanz mit relativ wenig Aufwand und kostensparend gemessen werden kann.

Weiter ist es ein Ziel der Erfindung, einen Sensor der eingangs genannten Art anzugeben, mit welchem eine Distanz einfach und kostenschonend bestimmbar ist.

Ein weiteres Ziel der Erfindung ist es, eine Verwendung eines solchen Sensors anzugeben.

Die Aufgabe wird erfindungsgemäß dadurch gelöst, dass bei einem Verfahren der eingangs genannten Art die Distanz mit einem als HEMT ausgebildeten Sensor bestimmt wird.

Ein mit der Erfindung erzielter Vorteil ist insbesondere darin zu sehen, dass mit einem erfindungsgemäßen Verfahren keine aufwendige kapazitive Messung durchgeführt werden muss, sondern mit dem als HEMT also als high-electron-mobility transistor ausgebildeten Sensor eine einfache Strommessung und/oder Widerstandsmessung ausreicht. Mit einem als HEMT bzw. Transistor mit hoher Elektronenbeweglichkeit ausgebildeten Sensor wird zwar eine Kapazitätsänderung erfasst, es wird jedoch eine Widerstandsänderung ausgelesen. Die Distanz bzw. ein Abstand zu einem elektrisch leitfähigen, insbesondere metallischen, Objekt wird elektronisch gemessen. Bei einem Verfahren zur Messung einer Distanz bzw. eines Abstandes mit einem als HEMT ausgebildeten Sensor kann dieser aufgrund einer gesteigerten Empfindlichkeit kleiner ausgebildet werden als ein kapazitiver Abstandssensor und es ist deutlich weniger Elektronik zum Betreiben desselben notwendig. Dadurch werden nicht nur Kosten des Sensors und somit des Verfahrens herabgesetzt, sondern auch Anwendungsgebiete für ein Verfahren zur Messung einer Distanz erweitert. Ferner ist eine Auswertung von Messergebnissen einfach und mit wenig Aufwand möglich.

Es ist von Vorteil, wenn die Distanz mit einem schichtförmig aus verschiedenen Halbleitermaterialien aufgebauten Sensor bestimmt wird. Dabei werden zwei Halbleitermaterialien mit unterschiedlich großen Bandlücken verwendet, welche auf ein Substrat aufgebracht werden, insbesondere wird eine Schicht aus Aluminiumgalliumnitrid (AlGaN) auf eine Schicht aus Galliumnitirid (GaN) aufgebracht. Die Schicht aus GaN kann auf verschiedene Arten von Substraten oder Wafern aufgebracht werden, wie beispielsweise auf einen Wafer aus Silicium oder Siliciumcarbid. Die beiden Schichten aus GaN und AlGaN bilden eine heterogene Halbleiterschicht, wobei an einer Grenze zwischen diesen Schichten ein zweidimensionales Elektronengas ausgebildet wird. Das zweidimensionale Elektronengas hängt einerseits von einem Aluminiumanteil und andererseits von einer Dicke der Schicht aus AlGaN ab. Oberhalb der Schicht aus AlGaN wird eine dielektrische Neutralisierungsschicht angeordnet, beispielsweise aus Siliciumnitrid. Grundsätzlich kann der Sensor aus beliebigen Halbleitermaterialien schichtförmig aufgebaut werden. Günstig ist es dabei, wenn Schichten aus verschiedenen Halbleitermaterialien mit unterschiedlich großen Bandlücken verwendet werden, wobei ein Halbleitermaterial mit einer größeren Bandlücke auf ein Halbleitermaterial mit einer kleineren Bandlücke aufgebracht wird. Aufgrund der unterschiedlich großen Bandlücken von zwei Halbleiterschichten wird zwischen diesen ein zweidimensionales Elektronengas ausgebildet, in welchem eine Elektronenbeweglichkeit sehr hoch und welches folglich elektrisch leitfähig ist.

Zweckmäßig ist es, wenn von einem zweidimensionalen Elektronengas ein Leitungskanal zwischen einem Source-Anschluss und einem Drain-Anschluss gebildet wird. Das zweidimensionale Elektronengas wird somit als elektrisch leitfähiger Kanal zwischen diesen beiden Anschlüssen genutzt. Eine Änderung des zweidimensionalen Elektronengases kann über ein Anlegen einer Spannung zwischen dem Source-Anschluss und dem Drain-Anschluss gemessen werden. Der Source-Anschluss und der Drain-Anschluss werden jeweils als metallische Elemente außenseitig am Sensor angeordnet und bilden mit der eine größere Bandlücke aufweisenden Halbleiterschicht einen ohmschen Kontakt aus, insbesondere mit der Schicht aus AlGaN. Somit weisen diese auch zum zweidimensionalen Elektronengas einen ohmschen Kontakt auf. Als Source-Anschluss und Drain-Anschluss können jeweils geschichtete Metalle verwendet werden. Diese sind beispielsweise aus Titan, Aluminium, Nickel und Silber schichtförmig aufgebaut, wobei Titan an die Halbleiterschicht angrenzt und Silber als oberste Schicht verwendet wird. Der Source-Anschluss und der Drain-Anschluss werden als externe Kontakte des Sensors verwendet, über welche bei einer konstanten angelegten Spannungsdifferenz zwischen den beiden Anschlüssen ein Strom bzw. eine Stromänderung im zweidimensionalen Elektronengas gemessen wird, um in weiterer Folge eine Distanz bzw. einen Abstand zu einem elektrisch leitfähigen Objekt zu bestimmen.

Es ist weiter günstig, wenn zwischen zumindest zwei metallischen Elektroden eine Spannung angelegt wird. Die zwei metallischen Elektroden sind insbesondere als Gate-Elektroden ausgebildet. Wird eine externe Spannung zwischen den zwei Elektroden angelegt, entsteht ein elektrisches Feld. Das elektrische Feld wird verändert, wenn eine Distanz zwischen dem Sensor und dem elektrisch leitfähigen Objekt verändert wird. Infolgedessen variiert auch das zweidimensionale Elektronengas, welches eine hohe Elektronenbeweglichkeit aufweist. Dadurch wird in weiterer Folge eine elektrische Leitfähigkeit zwischen dem Source-Anschluss und dem Drain-Anschluss verändert, wodurch die Distanz zu einem elektrisch leitfähigen Objekt bestimmt werden kann. Alternativ kann es auch zweckmäßig sein, zwischen den metallischen Elektroden und dem elektrisch leitfähigen Objekt eine Spannung anzulegen und dadurch eine Distanz zu bestimmen. Allgemein kann eine konstante Spannung oder eine Wechselspannung angelegt werden. Dementsprechend kann ein Source-Drain-Strom absolut oder eine Amplitudenänderung desselben gemessen werden. Die zwei metallischen Elektroden werden auf der dielektrischen Schicht angeordnet. Darüber hinaus bilden die metallischen Elektroden mit der eine größere Bandlücke aufweisenden Halbleiterschicht, insbesondere mit der Schicht aus AlGaN, jeweils einen Schottkykontakt aus, um das zweidimensionale Elektronengas über Anlegen einer externen Spannung kontrollieren zu können. Eine der metallischen Elektroden wird potenzialfrei am Sensor angeordnet und eine zweite Elektrode wird geerdet. Die zwei metallischen Elektroden bzw. Gates werden beispielsweise schichtweise aufgebaut, insbesondere aus Nickel und Silber, wobei die Elektroden zwischen dem Source-Anschluss und dem Drain-Anschluss angeordnet werden. Nickel ist als Schottkymetall bekannt. Sowohl die Elektroden als auch der Source-Anschluss und der Drain-Anschluss können einen ringförmigen, kreisrunden oder rechteckigen Querschnitt aufweisen.

Dabei ist es weiter zweckmäßig, wenn die Distanz über eine Änderung eines elektrischen Feldes zwischen den metallischen Elektroden bestimmt wird, wobei das zweidimensionale Elektronengas verändert wird. Abhängig von einem Abstand zu einem metallischen Objekt wird eine Kapazität zwischen diesem und den metallischen Elektroden verändert, wodurch bei einer angelegten Spannung zwischen den Elektroden das elektrische Feld zwischen denselben variiert wird. Des Weiteren wird dadurch auch das zweidimensionale Elektronengas beeinflusst. Allgemein gilt, dass das zweidimensionale Elektronengas über ein elektrisches Feld und eine Materialzusammensetzung des Sensors moduliert wird. Es kann auch zweckmäßig sein, dass zwischen den metallischen Elektroden und dem elektrisch leitfähigen Objekt eine Spannung angelegt wird. Die Distanz wird folglich über eine Änderung eines elektrischen Feldes zwischen den metallischen Elektroden und dem elektrisch leitfähigen Objekt bestimmt. Die Änderung des zweidimensionalen Elektronengases führt weiter zu einer Änderung der Spannungsdifferenz zwischen dem Source-Anschluss und dem Drain-Anschluss. Diese Spannungsdifferenz kann gemessen werden. Es ist somit keine kapazitive Messung mehr notwendig.

Es ist vorteilhaft, wenn ein Strom gemessen wird. Ein elektrisch leitfähiges Objekt, welches mit einem Abstand zu einem Sensor angeordnet wird, verändert die Kapazität zwischen dem Objekt und dem Sensor, wodurch das elektrische Feld zwischen den metallischen Elektroden und somit auch das zweidimensionale Elektronengas variiert wird. Durch eine solche Änderung des zweidimensionalen Elektronengases wird bei konstanter Spannung ein Strom zwischen dem Source-Anschluss und dem Drain-Anschluss verändert. Diese Stromänderung oder Widerstandsänderung zwischen den beiden Anschlüssen kann als Strom und/oder Widerstand gemessen werden. Eine Spannung zwischen dem Source-Anschluss und dem Drain-Anschluss ist konstant oder mit einer konstanten Amplitude ausgebildet und wird extern vorgegeben. Alternativ kann auch zwischen den metallischen Elektroden und dem elektrisch leitfähigen Objekt eine Spannung angelegt und dadurch eine Distanz bestimmt werden.

Eine Empfindlichkeit des erfindungsgemäßen Verfahrens kann durch Designparameter des Sensors verändert werden. Es kann beispielsweise ein Abstand zwischen den beiden metallischen Elektroden oder ein Abstand zwischen einer Elektrode und dem Source-Anschluss oder Drain-Anschluss angepasst werden. Darüber hinaus kann auch ein Abstand zwischen dem Source-Anschluss und Drain-Anschluss verändert werden. Es ist jedoch stets zweckmäßig, wenn der Source-Anschluss und der Drain-Anschluss außenseitig am Sensor und die beiden metallischen Elektroden mit Abstand zu diesen und beabstandet voneinander zwischen den beiden Anschlüssen angeordnet werden. Ferner kann eine Empfindlichkeit des Sensors auch über eine Querschnittsfläche der metallischen Elektroden bzw. des Source-Anschlusses und des Drain-Anschlusses beeinflusst werden.

Das weitere Ziel wird erreicht, wenn bei einem Sensor der eingangs genannten Art der Sensor als HEMT ausgebildet ist, wobei der Sensor insbesondere zwei oder mehr metallische Elektroden umfasst.

Ein damit erzielter Vorteil ist insbesondere darin zu sehen, dass ein solcher Sensor relativ einfach und kostengünstig herstellbar ist. Weiter ist ein solcher Sensor aufgrund dessen relativ einfachen Aufbaus in nahezu beliebiger Größe herstellbar, beispielsweise auch klein, wodurch Anwendungsgebiete des Sensors erweitert sind. Darüber hinaus umfasst ein erfindungsgemäßer Sensor auch deutlich weniger Elektronik als beispielsweise ein kapazitiver Abstandssensor. Zwischen den zwei Elektroden ist eine Spannung anlegbar, wodurch ein elektrisches Feld entsteht. Wird bei einer Distanzmessung zu einem elektrisch leitfähigen Objekt mit dem Sensor eine Distanz variiert, verändert sich eine Kapazität zwischen dem Sensor und dem elektrisch leitfähigen Objekt, wodurch sich das elektrische Feld zwischen den metallischen Elektroden ändert. Die zwei metallischen Elektroden bzw. Gates sind beispielsweise schichtweise aufgebaut, insbesondere aus Nickel und Silber. Nickel ist als Schottkymetall bekannt. Mit einem erfindungsgemäßen Sensor ist keine aufwendige kapazitive Messung notwendig, da eine einfache Strommessung und/oder Widerstandsmessung ausreicht. Ein als HEMT bzw. Transistor mit hoher Elektronenbeweglichkeit ausgebildeten Sensor erfasst zwar eine Kapazitätsänderung, es ist jedoch eine Widerstandsänderung oder Stromänderung auslesbar.

Grundsätzlich eignet sich ein beliebiges Halbleitermaterial zur Herstellung des Sensors. Es ist jedoch vorteilhaft, wenn der Sensor Schichten aus verschiedenen Halbleitermaterialien umfasst, insbesondere eine erste Schicht aus Galliumnitrid und eine zweite Schicht aus Aluminiumgalliumnitrid, wobei an einer Grenze zwischen den Schichten ein zweidimensionales Elektronengas ausgebildet ist. Es ist insbesondere zweckmäßig, zwei Halbleitermaterialien mit unterschiedlich großen Bandlücken zu verwenden, wobei ein Halbleitermaterial mit einer größeren Bandlücke auf ein Halbleitermaterial mit einer kleineren Bandlücke angeordnet ist, wodurch sich an einer Grenze zwischen den Schichten ein zweidimensionales Elektronengas ausbildet. Insbesondere ist ein Sensor mit einer auf eine Schicht aus GaN aufgebrachten Schicht aus AlGaN vorgesehen. Die Schicht aus GaN ist auf verschiedenen Arten von Wafern anordenbar, wie beispielsweise auf einen Wafer aus Silicium oder Siliciumcarbid. Die beiden Schichten aus GaN und AlGaN bilden eine heterogene Halbleiterschicht aus, wobei an einer Grenze zwischen diesen Schichten ein zweidimensionales Elektronengas ausgebildet ist. Das zweidimensionale Elektronengas hängt einerseits von einem Aluminiumanteil und andererseits von einer Dicke der Schicht aus AlGaN ab. Oberhalb der Schicht aus AlGaN umfasst der Sensor eine dielektrische Neutralisierungsschicht, beispielsweise aus Siliciumnitrid. Die metallischen Elektroden sind auf der eine größere Bandlücke aufweisenden Halbleiterschicht angeordnet, insbesondere auf der Schicht aus AlGaN, mit welcher diese jeweils einen Schottkykontakt ausbilden, um das zweidimensionale Elektronengas über Anlegen einer externen Spannung kontrollieren zu können.

Günstig ist es, wenn ein Source-Anschluss und ein Drain-Anschluss vorgesehen sind. Der Source-Anschluss und der Drain-Anschluss sind jeweils als metallische Elemente außenseitig am Sensor angeordnet und bilden mit der eine größere Bandlücke aufweisenden Halbleiterschicht, insbesondere mit der Schicht aus AlGaN, einen ohmschen Kontakt aus. Als Source-Anschluss und Drain-Anschluss können jeweils geschichtete Metalle vorgesehen sein. Diese sind beispielsweise aus Titan, Aluminium, Nickel und Silber schichtförmig aufgebaut, wobei Titan an die Halbleiterschicht angrenzt und Silber eine oberste Schicht darstellt. Der Source-Anschluss und der Drain-Anschluss bilden externe Kontakte des Sensors, über welche bei einer konstanten angelegten Spannung oder mit konstanter Amplitude zwischen den beiden Anschlüssen ein Strom bzw. eine Stromänderung messbar ist, um in weiterer Folge eine Distanz bzw. einen Abstand zu einem elektrisch leitfähigen Objekt zu bestimmen. Das zweidimensionale Elektronengas bildet einen Leitungskanal zwischen dem Source-Anschluss und dem Drain-Anschluss, wodurch dieses als leitfähiger Kanal nutzbar ist. Es ist somit eine Änderung des zweidimensionalen Elektronengases messbar. Sowohl die Elektroden als auch der Source-Anschluss und der Drain-Anschluss können einen ringförmigen, kreisrunden oder rechteckigen Querschnitt aufweisen.

Eine Empfindlichkeit des Sensors ist durch Designparameter desselben veränderbar. Es ist beispielsweise ein Abstand zwischen den beiden metallischen Elektroden oder ein Abstand zwischen einer Elektrode und dem Source-Anschluss oder Drain-Anschluss an jeweilige Messbedingungen anpassbar. Weiter ist auch ein Abstand zwischen dem Source-Anschluss und Drain-Anschluss veränderbar. Es ist jedoch stets zweckmäßig, den Source-Anschluss und den Drain-Anschluss außenseitig am Sensor und die beiden metallischen Elektroden mit Abstand zu diesen und beabstandet voneinander zwischen den beiden Anschlüssen anzuordnen. Die beiden metallischen Elektroden sind im Wesentlichen baugleich ausgebildet. Im Wesentlichen baugleich sind auch der Source-Anschluss und der Drain-Anschluss ausgebildet. Ferner ist eine Querschnittsfläche der Elektroden und der Anschlüsse anpassbar.

Bei einem Verfahren zur Herstellung eines erfindungsgemäßen Sensors wird ein schichtförmig aufgebautes Ausgangsmaterial mehrstufig behandelt, wobei dieses mehrmals beschichtet, geätzt und gereinigt wird.

Eine Verwendung eines erfindungsgemäßen Sensors erfolgt mit Vorteil beim Bestimmen einer Distanz zu einem metallischen Objekt.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 einen erfindungsgemäßen Sensor;
Fig. 2 eine Draufsicht eines erfindungsgemäßen Sensors gemäß Fig. 1;
Fig. 3 einen weiteren erfindungsgemäßen Sensor;
Fig. 4 eine Draufsicht eines erfindungsgemäßen Sensors;
Fig. 5 eine Draufsicht eines weiteren erfindungsgemäßen Sensors;
Fig. 6 eine Draufsicht eines weiteren erfindungsgemäßen Sensors;
Fig. 7 schematisch ein Verfahren zur Herstellung eines erfindungsgemäßen Sensors.

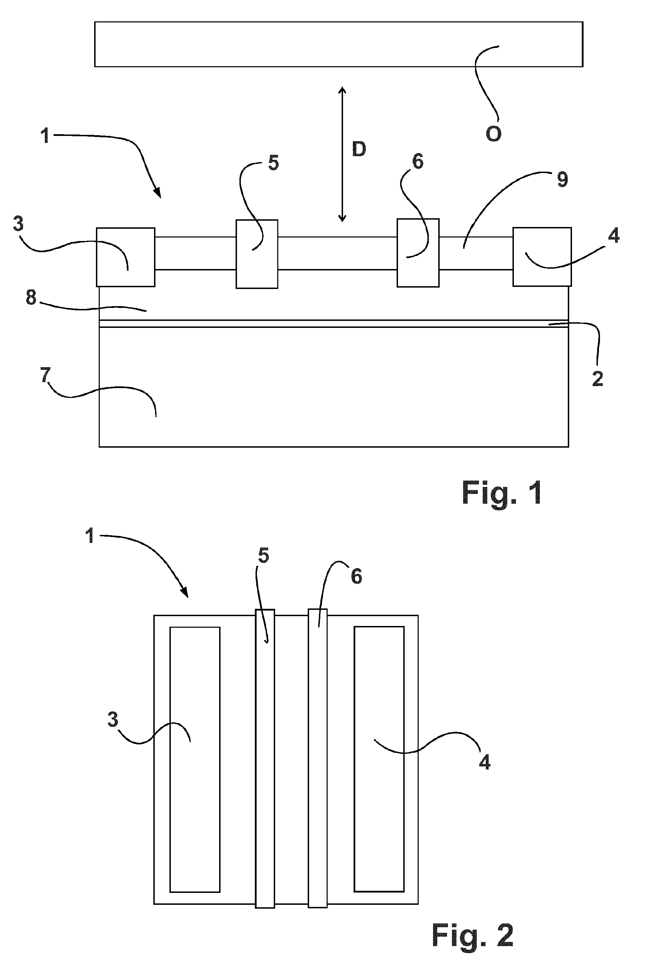

Fig. 1 zeigt einen erfindungsgemäßen Sensor 1 zur kontaktlosen Messung einer Distanz D zu einem elektrisch leitfähigen Objekt O. Der Sensor 1 ist als HEMT bzw. Transistor mit hoher Elektronenbeweglichkeit ausgebildet. Dieser umfasst eine erste Schicht 7 aus einem Halbleitermaterial mit einer großen Bandlücke, insbesondere eine Schicht 7 aus Galliumnitrid (GaN), worauf eine zweite Schicht 8 aus einem Halbleitermaterial mit einer großen Bandlücke, insbesondere eine Schicht 8 aus Aluminiumgalliumnitrid (AlGaN) aufgebracht ist. Die beiden Schichten 7, 8 weisen unterschiedlich große Bandlücken auf, wobei die Bandlücken der zweiten Schicht 8 größer sind als die Bandlücken der ersten Schicht 7, weshalb sich an einem Grenzbereich der beiden Schichten 7, 8 ein zweidimensionales Elektronengas 2 ausbildet. Der Sensor 1 umfasst weiter einen Source-Anschluss 3 und einen Drain-Anschluss 4, wobei das zweidimensionale Elektronengas 2 einen Leitungskanal zwischen diesen bildet. Der Source-Anschluss 3 und der Drain-Anschluss 4 sind als metallische Elemente ausgebildet und außenseitig am Sensor 1 angeordnet, wobei diese mit der zweiten Schicht 8 einen ohmschen Kontakt ausbilden. Zwischen den beiden Anschlüssen 3, 4 sind zwei metallische Elektroden 5, 6 vorgesehen, zwischen welchen eine konstante Spannung anlegbar ist und welche sich wie Elektroden eines Kondensators verhalten. Oberhalb der zweiten Schicht 8 ist ferner eine dielektrische Neutralisierungsschicht 9 vorgesehen, beispielsweise aus Siliciumnitrid.

In Fig. 2 ist eine Draufsicht eines Sensors 1 gemäß Fig. 1 gezeigt. Es ist ersichtlich, dass sowohl der Source-Anschluss 3 und der Drain-Anschluss 4 als auch die Elektroden 5, 6 einen rechteckigen Querschnitt aufweisen.

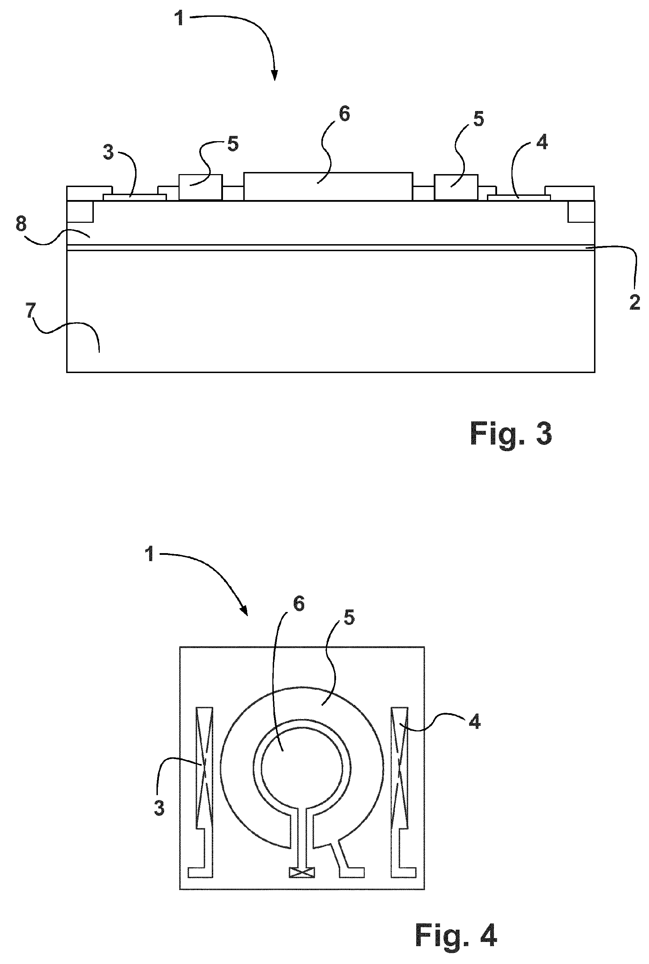

Ein weiterer erfindungsgemäßer Sensor 1 ist in Fig. 3 gezeigt. Der Sensor 1 umfasst eine erste Schicht 7 und eine zweite Schicht 8 aus einem Halbleitermaterial. Die beiden Schichten 7, 8 weisen unterschiedlich große Bandlücken auf, wobei die Bandlücken der zweiten Schicht 8 größer sind als die Bandlücken der ersten Schicht 7, weshalb sich an einem Grenzbereich der beiden Schichten 7, 8 ein zweidimensionales Elektronengas 2 ausbildet. Der Sensor 1 umfasst weiter einen Source-Anschluss 3 und einen Drain-Anschluss 4, wobei das zweidimensionale Elektronengas 2 einen Leitungskanal zwischen diesen bildet. Zwischen den beiden Anschlüssen 3, 4 sind zwei metallische Elektroden 5, 6 vorgesehen. Der Source-Anschluss 3 und der Drain-Anschluss 4 sind ringförmig ausgebildet und außenseitig am Sensor angeordnet. Eine erste Elektrode 5 ist ebenfalls ringförmig ausgebildet, wobei innerhalb derselben die zweite Elektrode 6 angeordnet ist, welche einen runden bzw. kreisförmigen Querschnitt aufweist.

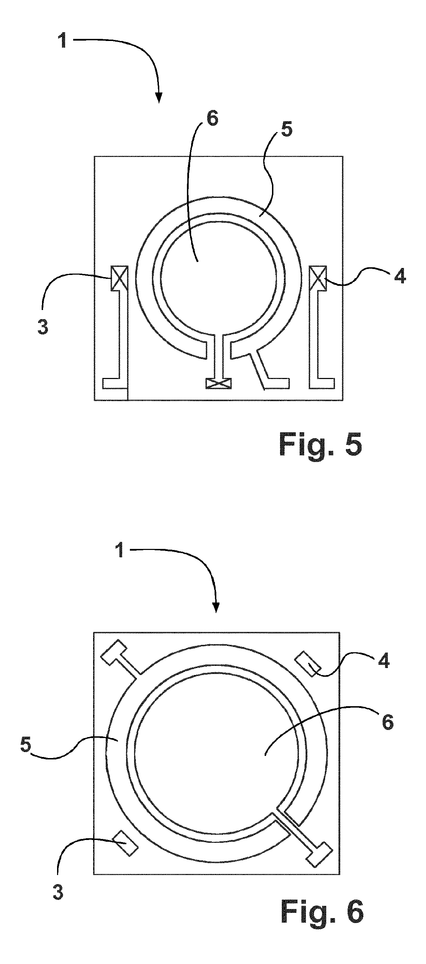

In Fig. 4 bis 6 sind jeweils Draufsichten eines Sensors 1 mit ringförmigen bzw. kreisförmigen Anschlüssen gezeigt, wobei diese jeweils andere Abmessungen aufweisen, wodurch eine Empfindlichkeit eines jeweiligen Sensors 1 veränderbar ist. Insbesondere sind der Source-Anschluss 3 und der Drain-Anschluss 4 bzw. die beiden Elektroden 5, 6 jeweils mit einer anderen Größe ausgebildet. Die zweite Elektrode 6 ist mit Vorteil stets als Messelektrode ausgebildet, wohingegen die erste Elektrode 5 dazu vorgesehen und ausgebildet ist, unerwünschte Randeffekte zu minimieren.

Bei einem erfindungsgemäßen Verfahren zur kontaktlosen Messung einer Distanz D zu einem elektrisch leitfähigen Objekt O mit einem Sensor 1 wird der Sensor 1 beabstandet vom Objekt O angeordnet. Zwischen den metallischen Elektroden 5, 6 wird eine konstante Spannung oder konstante Potenzialdifferenz angelegt.Wird eine Distanz D bzw. ein Abstand zum elektrisch leitfähigen Objekt O verändert, verändert sich auch ein elektrisches Feld zwischen dem Objekt O und den metallischen Elektroden 5, 6. Dadurch wird infolgedessen das zweidimensionale Elektronengas 2 verändert, was wiederum eine Kapazität zwischen dem Source-Anschluss 3 und dem Drain-Anschluss 4 verändert. Dies kann bei angelegter Spannung zwischen dem Source-Anschluss 3 und dem Drain-Anschluss 4 über eine einfache Strommessung oder Widerstandsmessung gemessen werden.

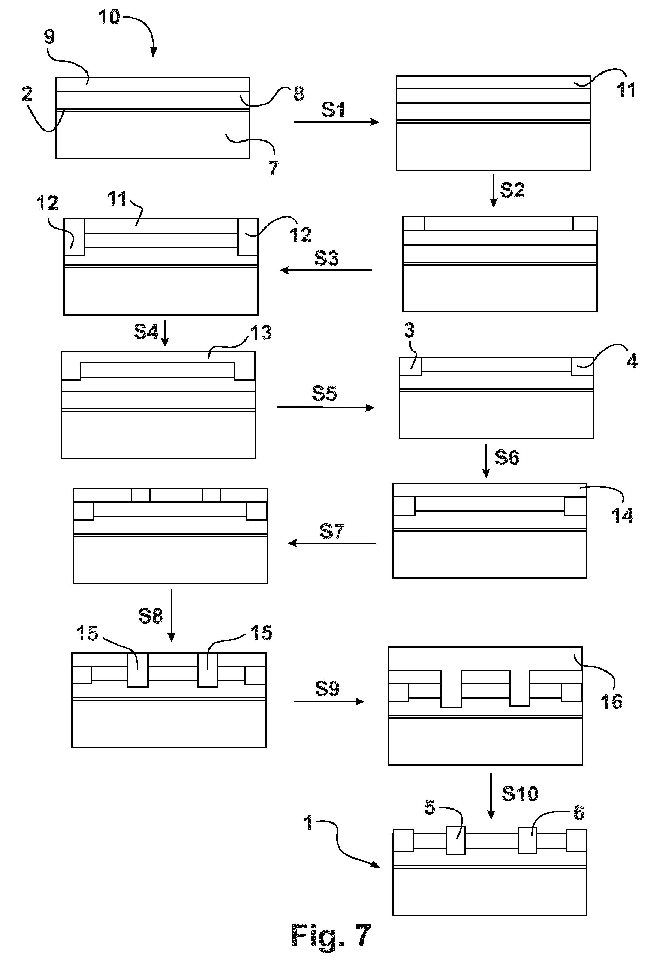

In Fig. 7 ist ein Verfahren zur Herstellung eines erfindungsgemäßen Sensors 1 gezeigt. Dabei wird ein schichtförmig aufgebautes Ausgangsmaterial 10 mehrstufig behandelt, wobei dieses mehrmals beschichtet, geätzt und gereinigt wird.

Insbesondere wird ein Ausgangsmaterial 10 bereitgestellt, welches einen schichtförmigen Aufbau einer ersten Schicht 7 aus einem Halbleitermaterial, einer zweiten Schicht 8 aus einem Halbleitermaterial und einer dielektrischen Neutralisierungsschicht 9 aufweist, wobei zwischen der ersten Schicht 7 und der zweiten Schicht 8 ein zweidimensionales Elektronengas 2 ausgebildet wird. Das Ausgangsmaterial 10 wird in einem ersten
Schritt S2 mit einer fotoresistenten Schicht 11 beschichtet. In einem davon unabhängigen zweiten Schritt S2 wird die fotoresistente Schicht 11 maskiert und belichtet. Davon unabhängig wird in einem dritten Schritt S3 zumindest teilweise eine widerstandsfähige Schicht 12 aufgebracht und geätzt. In einem vierten Schritt S4 wird eine weitere
Schicht 13 aufgebracht, wobei die weitere Schicht 13 in einem fünften Schritt S5 teilweise abgelöst wird, sodass ein Source-Anschluss 3 und ein Drain-Anschluss 4 gebildet werden. In einem davon unabhängigen sechsten Schritt S6 wird eine weitere fotoresistente Schicht 14 aufgebracht, welche anschließend in einem siebten Schritt S7 maskiert und belichtet wird. In einem achten Schritt S8 wird zumindest teilweise eine weitere widerstandsfähige Schicht 15 aufgebracht und geätzt, wonach in einem neunten Schritt eine weitere Beschichtung 16 aufgebracht wird. Um zwei metallische
Elektroden 5, 6 zu bilden, wird die weitere Beschichtung 16 in einem zehnten Schritt S10 teilweise abgelöst.

## Patentansprüche

1. Verfahren zur kontaktlosen Messung einer Distanz (D) mit einem Sensor (1), wobei eine Distanz (D) zu einem elektrisch leitfähigen Objekt (O) gemessen wird, **dadurch gekennzeichnet, dass** die Distanz (D) mit einem als HEMT ausgebildeten Sensor (1) bestimmt wird.

2. Verfahren nach Anspruch 1, **dadurch gekennzeichnet, dass** die Distanz (D) mit einem schichtförmig aus verschiedenen Halbleitermaterialien aufgebauten Sensor (1) bestimmt wird.

3. Verfahren nach Anspruch 1 oder 2, **dadurch gekennzeichnet, dass** von einem zweidimensionalen Elektronengas (2) ein Leitungskanal zwischen einem Source-Anschluss (3) und einem Drain-Anschluss (4) gebildet wird.

4. Verfahren nach einem der Ansprüche 1 bis 3, **dadurch gekennzeichnet, dass** zwischen zumindest zwei metallischen Elektroden (5, 6) eine Spannung angelegt wird.

5. Verfahren nach Anspruch 4, **dadurch gekennzeichnet, dass** die Distanz (D) über eine Änderung eines elektrischen Feldes zwischen den metallischen Elektroden (5, 6) bestimmt wird, wobei das zweidimensionale Elektronengas (2) verändert wird.

6. Verfahren nach einem der Ansprüche 1 bis 5, **dadurch gekennzeichnet, dass** ein Strom gemessen wird.

7. Sensor (1) zur kontaktlosen Messung einer Distanz (D) zu einem elektrisch leitfähigen Objekt (O), insbesondere zur Durchführung eines Verfahrens nach einem der Ansprüche 1 bis 6, **dadurch gekennzeichnet, dass** der Sensor (1) als HEMT ausgebildet ist, wobei der Sensor (1) insbesondere zwei oder mehr metallische Elektroden (5, 6) umfasst.

8. Sensor (1) nach Anspruch 7, **dadurch gekennzeichnet, dass** der Sensor Schichten (7, 8) aus verschiedenen Halbleitermaterialien umfasst, insbesondere eine erste Schicht (7) aus Galliumnitrid und eine zweite Schicht (8) aus Aluminiumgalliumnitrid, wobei an einer Grenze zwischen den Schichten (7, 8) ein zweidimensionales Elektronengas (2) ausgebildet ist.

9. Sensor (1) nach Anspruch 7 oder 8, **dadurch gekennzeichnet, dass** ein Source-Anschluss (3) und ein Drain-Anschluss (4) vorgesehen sind.

10. Verwendung eines Sensors (1) nach einem der Ansprüche 7 bis 9 zum Bestimmen einer Distanz (D) zu einem metallischen Objekt (O).
